# FASCICULE DE BREVET EUROPEEN

(11) **EP 3 816 854 B1**
(45) Date de publication et mention de la délivrance du brevet: **29.07.2026**
(21) Numéro de dépôt: 20205677.6
(22) Date de dépôt: 04.11.2020
(51) Int. Cl.: G06V 20/52, G06V 40/10, G08B 21/08, G06N 3/0464, G06N 3/09, G06V 10/764, G06V 10/82, G06N 3/042, G06N 3/045, G06N 3/08, G06N 5/022, G06N 5/04, G08B 29/18

(54) **PROCEDE ET DISPOSITIF DE CONTROLE AMELIORE DE PISCINES**
VERFAHREN UND VORRICHTUNG ZUR VERBESSERTEN KONTROLLE VON SCHWIMMBÄDERN
IMPROVED METHOD AND DEVICE FOR MONITORING SWIMMING-POOLS

(30) Priorité: 04.11.2019 FR 1912350
(43) Date de publication de la demande: 05.05.2021
(73) Titulaire: CF Control, 13210 Saint-Rémy-de-Provence (FR)
(72) Inventeur: GUILLOT, Sébastien, 13210 Saint-Rémy de Provence (FR); CHAZE, Nicolas, 13210 Saint-Rémy de Provence (FR)
(74) Mandataire: Santarelli

(56) Documents cités:
- WO-A1-2018/122857
- CN-A- 103 175 513
- CN-A- 109 325 403
- US-A1- 2014 111 332
- SHARMA NABIN ET AL: "Shark Detection from Aerial Imagery Using Region-Based CNN, a Study", 10 November 2018, ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 224 - 236, ISBN: 978-3-319-10403-4, XP047496201

## Description

L'invention concerne le domaine des piscines. Elle vise notamment à améliorer le contrôle de bassins et de piscines, en particulier à améliorer des paramètres de l'eau en fonction des besoins réels et/ou estimés d'utilisateurs.

Pour assurer le confort et la sécurité des usagers, l'eau d'une piscine est généralement filtrée et traitée pour, notamment, éviter la prolifération de bactéries. Un tel traitement consiste essentiellement à éliminer les corps étrangers, par exemple des résidus de la décomposition de feuilles, et à diffuser des produits chimiques dans l'eau. La filtration est typiquement effectuée en faisant circuler l'eau dans un système de filtration à l'aide d'une pompe. Cette dernière est souvent mise en route de façon manuelle par un utilisateur ou de façon automatique selon des plages horaires prédéterminées.

L'ajout de produits chimiques peut être effectué à l'aide de diffuseurs comprenant ces produits chimiques. A titre d'illustration, ces derniers peuvent prendre la forme de galets qui se décomposent au cours du temps et libèrent les produits chimiques. Le nombre de galets placés dans les diffuseurs est notamment ajusté selon la taille des galets, leur formulation, le volume d'eau à traiter et des conditions telles que la température de l'eau. Il existe également des systèmes de diffusion de produits chimiques qui calculent la quantité de produits chimiques à libérer en fonction de l'eau, en mesurant, par exemple, son taux de produits chimiques, son ph et sa température.

De même, pour assurer le confort des utilisateurs, une piscine peut être pourvue de moyens de chauffage, utilisant, par exemple, une pompe à chaleur, un réchauffeur électrique ou un échangeur à plaques. Ces moyens de chauffage sont généralement mis en route de façon manuelle ou de façon automatique selon des plages horaires prédéterminées.

WO 2018/122857 A1 divulgue un procédé de surveillance, d'analyse et de maintenance complètes de l'eau et des équipements de piscines.

Bien que ces solutions aient prouvé leur efficacité, elles ne donnent pas entière satisfaction, notamment en termes de quantité de produits chimiques utilisés et de consommation énergétique induite. Il existe donc un besoin pour améliorer le contrôle des piscines et, plus généralement, pour améliorer le contrôle des bassins.

### Exposé de l'invention

Il est proposé un procédé de gestion d'un bassin d'une piscine, le procédé comprenant :
- la réception de données d'au moins une source, la au moins une source comprenant au moins une source d'images représentatives du bassin et d'un environnement du bassin ;
- le traitement de données reçues, les données traitées comprenant au moins une image de la au moins une source d'images, le traitement étant effectué dans un module d'intelligence artificielle entrainé pour reconnaître des signatures, les signatures étant représentatives d'une qualité de l'eau et/ou d'éléments physiques présents dans un champ de vision de la au moins une source d'images, le traitement de données reçues comprenant en outre pour des signatures représentatives d'éléments physiques la détermination d'une position ou d'un état d'au moins un élément physique reconnu ;
- le traitement d'au moins une signature reconnue, dans un système expert, pour déterminer une modification d'au moins un paramètre du bassin ; et
- la transmission d'une commande à un actuateur (225) pour modifier le au moins un paramètre du bassin en fonction d'un résultat obtenu du traitement de l'au moins une signature reconnue.

Le procédé selon l'invention permet ainsi d'améliorer l'ajustement de paramètres d'un bassin par une analyse de ce dernier et de son environnement, en tenant compte de conditions actuelles et/ou anticipées.

Selon des modes de réalisation, le procédé comprend en outre la réception de données d'au moins une source distante, le système expert traitant la au moins une signature reconnue et des données reçues de la au moins une source distante pour déterminer une modification d'au moins un paramètre du bassin. Des paramètres du bassin peuvent ainsi être déterminés en fonction de données extérieures, par exemple de prédiction météorologiques.

Selon des modes de réalisation, le module d'intelligence artificielle comprend plusieurs moteurs d'intelligence artificielle, chaque moteur d'intelligence artificielle étant configuré pour identifier des signatures d'un type prédéterminé.

Selon des modes de réalisation, le système expert utilise au moins une règle configurée localement et au moins une règle configurée lors d'une phase d'installation ou reçue d'un serveur distant. Il est ainsi possible de distinguer des règles d'un utilisateur de règles imposées par un tiers, par exemple un constructeur, un installateur ou une agence de certification.

Selon des modes de réalisation, le procédé comprend en outre l'identification d'un état à risque et le déclenchement d'une alarme.

Selon un autre aspect, il est proposé un dispositif comprenant des moyens adaptés à la mise en œuvre de chacune des étapes du procédé décrit précédemment.

Selon un autre aspect, il est proposé un programme d'ordinateur comportant des instructions pour la mise en œuvre de chacune des étapes du procédé tel que défini précédemment lorsque ce programme est exécuté par un processeur.

### Brève description des dessins

D'autres caractéristiques, détails et avantages de l'invention apparaîtront à la lecture de la description détaillée ci-après et à l'analyse des dessins annexés, dans lesquels :
**Fig. 1**
   La figure 1 est un exemple d'un environnement comprenant une piscine, permettant la mise en œuvre de l'invention selon des modes de réalisation.
**Fig**. **2**
   La figure 2 illustre un exemple d'étapes du procédé selon des modes de réalisation de l'invention.
**Fig. 3**

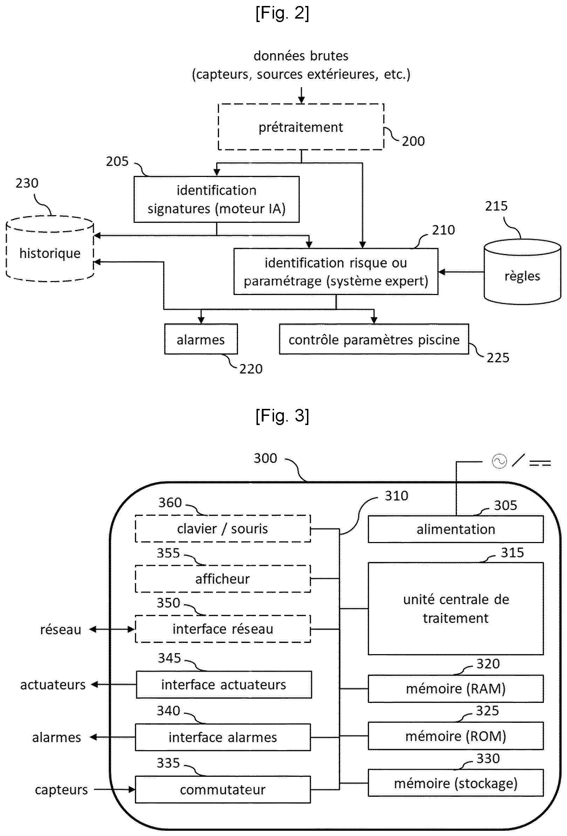

   La figure 3 illustre schématiquement un exemple d'architecture d'un calculateur pour surveiller et contrôler une piscine, selon des modes de réalisation de l'invention.
**Fig. 4**

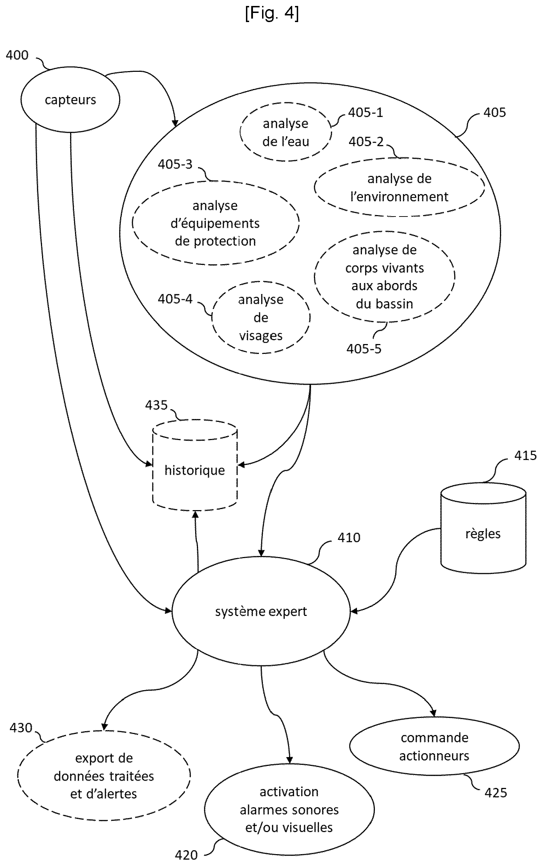

   La figure 4 illustre schématiquement un exemple de mise en oeuvre du procédé selon des modes de réalisation.

### Description des modes de réalisation

Selon des modes de réalisation, l'invention a pour objet la collecte et le traitement de données issues d'une ou plusieurs sources pour contrôler et gérer, de façon centralisée ou non, un bassin ou une piscine, notamment pour contrôler des actuateurs utilisés pour réguler des paramètres d'une piscine tels que la température de l'eau, son niveau ou son taux de certains agents chimiques (e.g. chlore, sels, etc.). Des alertes peuvent en outre être déclenchées. Des données issues des sources sont traitées dans un module d'intelligence artificielle pour identifier des signatures, de préférence prédéterminées, par exemple reconnaître des éléments physiques tels qu'une personne ou des feuilles, permettant de caractériser une situation. Ces signatures sont alors utilisées dans un système expert utilisant des règles pour contrôler des actuateurs. Ces signatures peuvent également être utilisées pour déclencher des alertes. La combinaison d'un ou plusieurs moteurs d'intelligence artificielle avec un système expert permet de répondre à un très grand nombre de situations sans nécessiter un apprentissage exhaustif ou quasi-exhaustifs de toutes les situations potentielles.

L'invention permet ainsi de contrôler des paramètres d'une piscine à l'aide d'un ou plusieurs actuateurs en fonction, par exemple, de la présence effective ou anticipée de personnes dans et/ou à proximité du bassin. L'invention permet ainsi d'anticiper des conditions à venir et d'agir sur certains paramètres de la piscine en vue de ces prédictions (e.g. prédiction de fréquentation de la piscine au vu du jour, de congés, de l'heure et/ou de prévisions météorologiques).

L'invention permet ainsi aux systèmes de traitement et de filtration de tenir compte de paramètres tels que la fréquentation actuelle et prévue du bassin et son aspect général (par exemple la présence de feuille dans le bassin, la turbidité et/ou la couleur de l'eau) pour ajuster, par exemple, l'ajout de produits chimiques et la durée de filtration.

L'invention permet en outre d'optimiser la consommation énergétique nécessaire au chauffage ou au maintien en température de l'eau du bassin en tenant compte de la fréquentation actuelle et prévue du bassin ainsi que des conditions et prédictions météorologiques.

L'invention permet également de générer des alarmes en tenant compte des circonstances, par exemple du port ou non de brassards par un enfant situé à proximité immédiate du bassin ou de la tenue (de bain ou non) d'une personne dans le bassin.

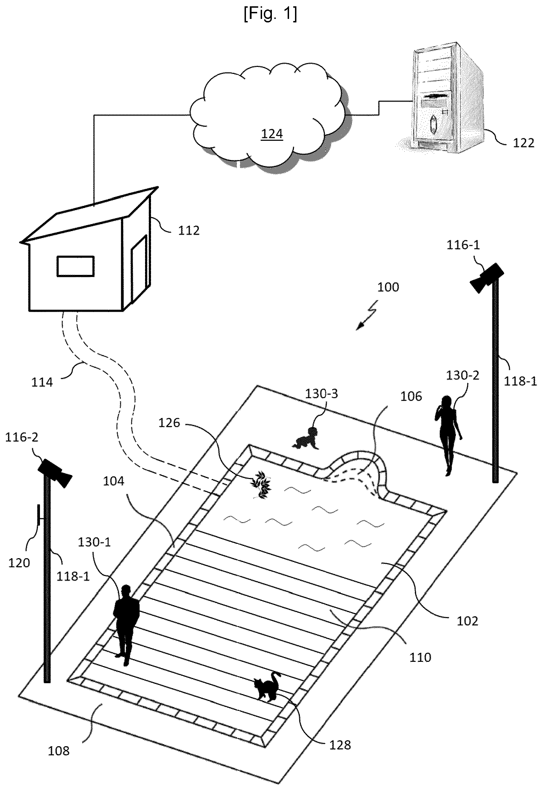

La figure 1 est un exemple d'un environnement comprenant une piscine, permettant la mise en oeuvre de l'invention selon des modes de réalisation.

Comme illustré, la piscine et son environnement, référencés 100, comprennent un bassin 102 entouré d'une bordure 104 comprenant ici des margelles. Le bassin est accessible par un escalier 106. Le tour du bassin comprend un espace 108 aménagé pour permettre la circulation des personnes profitant de la piscine et/ou en assurant l'entretien. Le bassin, lorsqu'il n'est pas utilisé, peut être couvert par un volet 110 ou une bâche de sécurité. A titre d'illustration, ce volet ou cette bâche de sécurité est ici représenté de façon partiellement ouvert.

L'eau du bassin est entretenue par un système de traitement et de filtration (non représenté). Un tel système est généralement abrité dans un abri de piscine 112, situé à quelques mètres ou dizaines de mètres du bassin et relié à celui-ci via des canalisations 114. Ce système peut également comprendre des moyens pour chauffer l'eau de la piscine, par exemple une pompe à chaleur. Ce système peut être connecté à un serveur distant 122 via un réseau de communication 124, par exemple pour permettre une surveillance et/ou un contrôle à distance des paramètres de la piscine tels que sa température ou son taux en agents chimiques (e.g. chlore, sels, etc.).

Selon des modes de réalisation, des capteurs sont disposés aux abords de la piscine. Ces capteurs peuvent comprendre un ou plusieurs capteurs d'images, par exemple les capteurs d'images 116-1 et 116-2, ici montés sur des supports 118-1 et 118-2, respectivement. Ce ou ces capteurs d'images sont, de préférence, agencés de telle sorte que leur champ de vision couvre l'ensemble du bassin 102 et ses abords 108. L'utilisation de plusieurs capteurs d'images permet de limiter des risques qu'un objet soit caché par un autre. Ils peuvent également comprendre un ou plusieurs capteurs permettant de mesurer des paramètres extérieurs tels que la température, par exemple le capteur 120, ainsi que des capteurs pour mesurer des paramètres de l'eau de la piscine, par exemple la température de l'eau, son ph, son taux de chlore, etc. Ces derniers peuvent être placés, par exemple, dans le bassin et/ou dans le système de traitement et de filtration.

Selon des modes de réalisation, un ou plusieurs capteurs d'images peuvent être situés de telle sorte à permettre la surveillance de la surface de l'eau du bassin. Ils peuvent, par exemple, être intégrés aux margelles. De même, un ou plusieurs capteurs d'images peuvent être situés dans le bassin, sous la surface de l'eau, pour permettre une surveillance sous la surface de l'eau du bassin. Ce ou ces capteurs d'images peuvent venir en complément ou à la place des capteurs d'images génériquement référencés 116.

Les capteurs mis en oeuvre sont reliés à un ou plusieurs calculateurs, de façon filaire et/ou sans fil, par exemple en utilisant un protocole de communication locale de type WiFi ou Bluetooth (WiFi et Bluetooth sont des marques) ou distante de type GPRS (sigle de *global packet radio service* en terminologie anglo-saxonne), 3G, 4G, SigFox ou LoRa (SigFox et LoRa sont des marques). Ce ou ces calculateurs peuvent être placés dans l'abri 112, dans un autre abri ou une maison, à proximité ou non de la piscine. Ils peuvent en outre être connectés à des serveurs distants, par exemple au serveur 122, pour recevoir des informations tels que des prévisions météorologiques et/ou des données d'identification de personnes autorisées à effectuer certaines opérations (par exemple des données de reconnaissance faciale, de reconnaissance d'iris ou d'empreintes digitales) et/ou pour transmettre des données relatives au fonctionnement de la piscine (par exemple à un propriétaire, un responsable et/ou un partenaire).

Les images issues des capteurs d'images, par exemple des capteurs d'images 116-1 et 116-2, permettent de détecter la présence d'éléments physiques dans leur champ ainsi que leur position. A titre d'exemple, des images issues des capteurs d'images 116-1 et 116-2 permettent de détecter les feuilles 126, l'animal 128 et personnes 130-1, 130-2 et 130-3 et de déterminer leur position. A ces fins, un module d'intelligence artificielle est utilisé. Ce dernier permet notamment d'effectuer une reconnaissance d'image. Selon des modes de réalisation il permet de détecter l'approche d'une personne, de discriminer un type d'utilisateur (par exemple un adulte d'un enfant), de déterminer si la personne est en tenue de bain (par exemple en maillot de bain), d'analyser si elle est équipée ou non d'un dispositif de sécurité (par exemple de brassards) et/ou de détecter une situation de danger (e.g. personne au fond du bassin pendant un certain temps ou personne en difficulté de natation). Selon des modes de réalisation, il utilise des algorithmes standard, par exemple des algorithmes basés sur des réseaux de neurones.

A titre d'illustration, le ou les moteurs d'intelligence artificielle utilisés peuvent être des réseaux de neurones convolutifs, notamment des réseaux de neurones connus sous les noms R-CNN (sigle de *region-based convolutional neural networks* en terminologie anglo-saxonne), Faster R-CNN ou Mask R-CNN), YOLO (acronyme de *you only look once* en terminologie anglo-saxonne) ou encore des machines a vecteurs de support (aussi connues sous le nom de SVM).

La figure 2 illustre un exemple d'étapes du procédé selon des modes de réalisation de l'invention.

Comme illustré, les données brutes issues des capteurs mis en oeuvre et/ou de sources extérieures, peuvent être prétraitées (étape 200). Cette étape, optionnelle, peut avoir pour objet de corriger d'éventuelles distorsions d'images (e.g. dues à l'utilisation d'objectifs grand-angles), de limiter une zone de traitement, de normaliser les valeurs des mesures, par exemple pour les coder dans un format particulier, par exemple sur 8 bits, et/ou de filtrer des valeurs qui seraient en dehors de plages prédéterminées.

Dans une étape suivante (étape 205), les données brutes ou certaines des données brutes (prétraitées ou non) sont transmises à un ou plusieurs moteurs d'intelligence artificielle pour identifier des signatures, de préférence prédéterminées. A titre d'illustration, un premier ensemble de données brutes (prétraitées ou non), par exemple une ou plusieurs images, est adressé à un premier moteur d'intelligence artificielle pour détecter la présence de personnes et leur position, un second ensemble de données brutes (prétraitées ou non) comprenant en outre des résultats du premier moteur d'intelligence artificielle est adressé à un second moteur d'intelligence artificielle pour détecter si les personnes détectées portent des dispositifs de sécurité et un troisième ensemble de données brutes (prétraitées ou non), par exemple une ou plusieurs images, est adressé à un troisième moteur d'intelligence artificielle pour caractériser un niveau de qualité de l'eau du bassin, par exemple en estimant le niveau, la couleur et la turbidité de l'eau du bassin et détectant la présence de corps étrangers. D'autres implémentations sont possibles. A titre d'illustration, un même moteur d'intelligence artificielle peut être configuré pour détecter la présence de personnes, leur type et leur position et pour détecter si les personnes détectées portent des dispositifs de sécurité. De même, il est possible qu'un même moteur d'intelligence artificielle soit configuré pour détecter la présence de personnes et les identifier par reconnaissance faciale.

A titre d'illustration, les moteurs d'intelligence artificielle peuvent être utilisés pour :
- détecter une personne ;
- discriminer le type de personne (e.g. adulte ou enfant) ;
- détecter l'approche d'une personne ou d'un animal vers le bassin ;
- effectuer une reconnaissance faciale pour identifier une personne (par exemple pour l'autoriser d'effectuer certaines actions telles que l'activation/désactivation d'une alarme ou l'ouverture/fermeture d'un volet ou d'une bâche de sécurité) ;
- détecter une chute dans le bassin ;
- détecter la tenue (par exemple une tenue de bain telle qu'un maillot de bain) d'une personne ;
- détecter la présence d'un dispositif de sécurité tel que des brassards sur une personne ;
- analyser la qualité de l'eau du bassin en fournissant, par exemple, son niveau, sa couleur et sa turbidité et en détectant la présence de corps étrangers, par exemple de feuilles ;
- détecter la présence d'un équipement de protection tel qu'un volet, une bâche ou une barrière sur ou autour du bassin et leur bonne installation (en vérifiant, par exemple, la présence et l'état d'un système de verrouillage) ; et
- détecter la présence d'un robot de piscine ou d'un autre système de nettoyage de la piscine et déterminer son état (par exemple un étant en fonctionnement ou en fin de cycle).

Il est observé ici que le ou les moteurs d'intelligence artificielle mis en œuvre sont capables d'utiliser un usage passé pour prédire un usage futur. Il s'agit de systèmes prédictifs. Il est également observé que l'apprentissage du ou des moteurs d'intelligence artificielle peut être complété lors de leur utilisation, permettant d'améliorer la qualité de l'apprentissage.

Les résultats obtenus du ou des moteurs d'intelligence artificielle sont transmis à un système expert, seuls ou avec des données brutes (prétraitées ou non), pour identifier un risque et/ou un changement de paramètre(s) du système de traitement et de filtration (étape 210). A ces fins, le système expert utilise des règles prédéterminées stockées dans une base de règles 215. La base de règles peut comprendre deux types de règles :
- des règles déterminées par un propriétaire ou un responsable de la piscine pour, par exemple, déterminer des droits (par exemple déterminer qui a le droit d'activer/désactiver une alarme, par exemple en utilisant le visage ou une empreinte digitale comme identifiant), déterminer des consignes de sécurité (par exemple définir un type de personnes devant porter des dispositifs de sécurité tels que des brassards), déterminer des consignes de fonctionnement (par exemple des profils de températures de l'eau du bassin), déterminer des actions à effectuer en cas d'approche du bassin ou lors d'un bain (par exemple allumer des projecteurs de la piscine et/ou lancer le système de nage à contre-courant automatiquement), délimiter des zones à risque et déterminer des actions à prendre (par exemple lorsqu'un animal est détecté sur un volet ou une bâche de sécurité) ;
- des règles déterminées par le constructeur et/ou l'installateur, qui, de préférence, ne sont pas modifiables par un utilisateur, un propriétaire ou un responsable de la piscine pour, par exemple, déclencher une alarme dès que la présence d'un enfant est détectée à proximité de la piscine en l'absence d'un adulte, déclencher une alarme lors de la chute d'une personne dans le bassin (par exemple en discriminant la chute d'une baignade en fonction de la tenue de la personne), déclencher une alarme dès qu'il est probable que la masse des objets détectés sur un volet ou une bâche de sécurité dépasse un seuil prédéterminé (par exemple si la présence de plus d'une personne est détectée sur le volet ou la bâche de sécurité), déclencher une alarme en réponse à une analyse de conformité d'un système de protection (par exemple si une barrière est ouverte en l'absence de personne), déclencher une alarme en réponse à une analyse de risque de contournement d'un système de protection (par exemple si un objet tel qu'un tabouret est détecté à proximité d'une barrière) et évaluer une quantité d'agents chimiques et/ou un temps de filtration en fonction de paramètres tels que le nombre de personnes dans le bassin et/ou la qualité perçue de l'eau du bassin.

Les règles déterminées par le constructeur et/ou l'installateur peuvent être configurées lors de l'installation du système de surveillance et de contrôle centralisés et/ou peuvent être reçues d'un serveur distant.

A titre d'illustration, le système expert utilisé peut être du type KBES (sigle de *knowledge based expert system* en terminologie anglo-saxonne), le moteur d'inférence pouvant, par exemple, être un système bayésien.

Les résultats obtenus du système expert permettent de déclencher une alarme (étape 220) et/ou contrôler un ou plusieurs actuateurs pour ajuster un ou plusieurs paramètres de la piscine (étape 225).

Les résultats du ou des moteurs d'intelligence artificielle et du système expert peuvent être stockés dans une base de données locale et/ou distante (par exemple la base de données 230) constituant un historique de la surveillance et du contrôle de la piscine.

Le système d'alarme permet d'alerter localement les personnes se trouvant à proximité de la piscine, par exemple à l'aide d'une sirène et/ou de flash lumineux et/ou d'alerter des personnes distantes, par exemple le propriétaire ou le responsable de la piscine, par exemple en adressant un message sur un smartphone et/ou en déclenchant une sirène et/ou flash lumineux distants.

A titre d'illustration, les actuateurs peuvent comprendre des commutateurs pour activer des pompes de filtration, commander un volet ou une bâche de sécurité, réguler un système de chauffage, déclencher des éclairages et/ou déclencher des systèmes de remplissage/vidange de la piscine.

La figure 3 illustre schématiquement un exemple d'architecture d'un calculateur 300 pour surveiller et contrôler, de façon centralisée, une piscine, selon des modes de réalisation de l'invention. Le calculateur 300 est par exemple un ordinateur de type PC (sigle de *personal computer* en terminologie anglo-saxonne).

Comme illustré, le calculateur 300 comprend une alimentation électrique 305 fournissant l'énergie électrique nécessaire aux composants du calculateur 300. Il comprend en outre un ou plusieurs bus de communication 310, partagés au non, auxquels sont reliés :
- une unité centrale de traitement ou microprocesseur 315 (CPU, sigle de *central processing unit* en terminologie anglo-saxonne) comprenant en outre, de préférence, un ou plusieurs coprocesseurs, par exemple de type GPU (sigle de *graphical processing unit* en terminologie anglo-saxonne), permettant d'accélérer les calculs (par exemple en les parallélisant) ;
- une mémoire vive ou mémoire cache 320 (RAM, acronyme de *random access memory* en terminologie anglo-saxonne) comportant des registres adaptés à enregistrer des variables et paramètres créés et modifiés au cours de l'exécution des programmes mettant en oeuvre les étapes décrites précédemment ;
- une mémoire morte 325 (ROM, acronyme de *read only memory* en terminologie anglo-saxonne) pouvant comporter un système d'exploitation et des programmes mettant en œuvre les étapes décrites précédemment ;
- un support de stockage 330, fixe ou amovible, pouvant notamment comporter des règles utilisées par le système expert et/ou pouvant être utilisé pour stocker des résultats du ou des moteurs d'intelligence artificielle et/ou du système expert ;
- un commutateur 335 pour recevoir, de façon sélective, des données issues de capteurs ; et
- une interface alarmes 340 pour émettre, de façon sonore et/ou visuelle, des signaux d'alarmes ainsi qu'une interface actuateurs 345 pour contrôler des actuateurs. Les interfaces alarmes et actuateurs peuvent être distinctes ou non. Il peut s'agir, par exemple, d'une interface standard d'entrée/sortie.

Le calculateur 300 comprend en outre, de préférence, une interface de communication 350 reliée à un réseau de communication, par exemple un réseau de communication sans fil et/ou un réseau de communication local, l'interface étant apte à transmettre et à recevoir des données, notamment vers ou depuis un autre des serveurs, des ordinateurs, des tablettes et/ou des smartphones.

Optionnellement, le calculateur 300 peut également disposer d'un afficheur 355, notamment d'un afficheur tactile permettant à un utilisateur d'interagir avec des programmes mis en œuvre par le calculateur 300, et de moyens de saisie tels qu'un clavier et/ou une souris permettant à un utilisateur d'interagir avec des programmes mis en œuvre par le calculateur 300.

Le bus de communication permet la communication et l'interopérabilité entre les différents éléments inclus dans le calculateur 300 ou reliés à lui. La représentation du bus n'est pas limitative et, notamment, l'unité centrale de traitement est susceptible de communiquer des instructions à tout élément du calculateur 300 directement ou par l'intermédiaire d'un autre élément du calculateur 300.

Le code exécutable des programmes permettant au calculateur 300 de mettre en œuvre, en totalité ou en partie, le procédé selon l'invention, peut être stocké, par exemple, dans la mémoire morte 325. Selon une variante, le code exécutable des programmes pourra être reçu par l'intermédiaire du réseau de communication, via l'interface 350, pour être stocké de façon identique à celle décrite précédemment. De manière plus générale, le ou les programmes pourront être chargés dans un des moyens de stockage du calculateur 300 avant d'être exécutés.

L'unité centrale de traitement 315 va commander et diriger l'exécution des instructions ou portions de code logiciel du ou des programmes selon l'invention, instructions qui sont stockées, par exemple, dans la mémoire morte 325 ou bien dans les autres éléments de stockage précités. Lors de la mise sous tension, le ou les programmes qui sont stockés dans une mémoire non volatile, par exemple la mémoire morte 325, sont transférés dans la mémoire vive 320 qui contient alors le code exécutable du ou des programmes, ainsi que des registres pour mémoriser les variables et paramètres nécessaires à la mise en œuvre du procédé selon l'invention.

Le calculateur 300 peut être installé à proximité d'une piscine ou à distance, par exemple dans une installation d'un tiers en charge de l'entretien de la piscine. Il peut également être scindé en plusieurs éléments, certains pouvant être installés à proximité de la piscine et d'autres à distance. De même, une partie des traitements et/ou calculs peut être effectuée dans ou à proximité des capteurs. A titre d'illustration, une reconnaissance de personnes peut être effectuée dans une caméra, l'information étant transmise en plus ou à la place d'images à un système de contrôle de la piscine. Toujours à titre d'illustration, le module d'intelligence artificielle peut être mis en oeuvre à distance et le système expert peut être mis en œuvre de façon locale.

La figure 4 illustre schématiquement un exemple de mise en œuvre du procédé selon des modes de réalisation.

Comme illustré, des mesures issues de capteurs 400 sont transmises, de façon optionnelle après un prétraitement, à un module d'intelligence artificielle 405 comprenant un ou plusieurs moteurs d'intelligence artificielle, par exemple un moteur d'intelligence artificielle 405-1 pour analyser l'eau d'un bassin, un moteur d'intelligence artificielle 405-2 pour analyser l'environnement du bassin, un moteur d'intelligence artificielle 405-3 pour analyser des équipements de protection, un moteur d'intelligence artificielle 405-4 pour analyser des visages et un moteur d'intelligence artificielle 405-5 pour analyser des corps vivants, notamment des personnes et/ou des animaux, aux abords du bassin.

Les résultats du module d'intelligence artificielle 405 et, de façon optionnelle, des mesures issues de capteurs 400 sont transmis au système expert qui analyse les données reçues au regard de règles prédéterminées stockées dans une base de règle 415.

En réponse à l'application des règles aux mesures effectuées par les capteurs et à l'analyse menée par le module d'intelligence artificielle, des alarmes 420 sonores et/ou visuelles peuvent être émises et/ou des commandes 425 peuvent être adressées aux actionneurs, par exemple pour réguler le dosage d'agents chimiques et la température dans un système de traitement et de filtration ou pour contrôler l'ouverture et la fermeture d'un volet ou d'une bâche de sécurité.

Comme illustrés, ces alarmes et ces commandes peuvent être exportées vers des systèmes externes (référence 430). De plus, les mesures effectuées et les résultats obtenus peuvent être mémorisés pour conserver un historique du fonctionnement d'une piscine.

A titre d'illustration, la sécurité d'une piscine (à l'exclusion de la sécurité liée à la chimie de l'eau) offerte par le procédé et le dispositif selon l'invention permet :
1) la génération d'alertes, selon la configuration de l'utilisateur et de paramètres génériques, en cas de :
   - détection d'une personne en approche de la piscine, notamment s'il s'agit d'un adulte, d'un enfant, en fonction de sa tenue (tenue de bain ou non) et/ou du port d'un dispositif de sécurité tel que des brassards, selon que la personne soit autorisée ou non, une personne pouvant notamment être identifiée par reconnaissance faciale ;
   - détection d'un animal en approche de la piscine, tombé dans le bassin ou se trouvant en un emplacement particulier tel qu'un volet ou une bâche de protection ;
   - détection de contournement d'une protection existante, par exemple un saut au-dessus d'une barrière ;
   - détection de limite de charge d'un système de protection existant selon, par exemple, un nombre de personnes présentes sur ce système de protection ou la présence de neige sur ce système de protection ; et/ou
   - détection de mauvaise installation d'un système de protection tel que l'absence de sangle d'un volet ou d'une bâche de protection, la fermeture partielle d'un volet ou un mauvais verrouillage d'une barrière ;
2) la génération d'alertes et la commande d'actuateurs, selon la configuration de l'utilisateur et de paramètres génériques, en cas de :
   - détection d'une chute, volontaire ou non, dans le bassin au moment de la fermeture d'un volet, conduisant à la génération d'une alerte et à l'arrêt, éventuellement la réouverture, du volet ; et
   - détection d'une baignade en présence d'un robot de nettoyage ou de tout autre équipement incompatible avec la présence d'un baigneur, conduisant à la génération d'une alerte et à l'arrêt du robot ou de l'équipement ; et
3) la commande d'un actuateur pour piloter un équipement pour, par exemple :
   - déclencher un éclairage la nuit en cas de détection d'une personne pour diminuer le risque de chute ;
   - vérifier la présence autorisée aux abords du bassin lors de l'ouverture ou la fermeture d'un volet ;
   - arrêter automatiquement un volet en fin de course d'ouverture ou de fermeture ;
   - adresser des notifications et des conseils de sécurité, par exemple avertir en cas de prévision de chutes de neige pouvant endommager un volet ou une bâche de sécurité ; et
   - activer ou désactiver temporairement ou définitivement des alarmes lorsque le demandeur est identifié et a les droits correspondants, de façon locale ou à distance, par exemple à l'aide d'une application dédiée exécutée à distance sur une tablette, un smartphone ou un ordinateur portable, l'utilisateur étant alors, de préférence, identifié par authentification forte utilisant, par exemple, une reconnaissance d'empreinte digitale ou une reconnaissance d'iris.

Toujours à titre d'illustration, le contrôle et la surveillance du traitement et de la filtration d'une piscine offerts par le procédé et le dispositif selon l'invention permettent :
1) d'agir sur les systèmes de traitement et de filtration en fonction de :
   - la détection de l'utilisation du bassin et de l'évaluation du nombre de baigneurs, cumulé sur une période de temps définie ;
   - la détection de l'état ouvert ou fermé d'un volet ou d'une bâche de sécurité ;
   - la détection de l'état ouvert ou fermé d'un volet ou d'une bâche de sécurité et de prévision météorologiques ; et
   - l'analyse de la qualité de l'eau du bassin, notamment par analyse d'images (estimation de la turbidité et la couleur de l'eau et détection de la présence de sources de pollution telles que la présence de feuilles) ;
2) d'agir sur les systèmes de vidange et de remplissage du bassin en fonction, par exemple, de la détection du niveau de l'eau et de prévisions météorologiques ;
3) d'adresser des notifications d'actions à un propriétaire, un responsable et/ou un professionnel, par exemple lorsque la présence de feuilles est détectée et qu'il est nécessaire de les ramasser et/ou qu'il est déterminé que l'eau du bassin est trouble ou colorée et qu'elle a besoin d'un traitement chimique manuel.

Toujours à titre d'illustration, le confort que confère aux utilisateurs d'une piscine le procédé et le dispositif selon l'invention permet :
1) de déterminer une probabilité de baignade en fonction d'une utilisation passée et de données météorologiques et d'adapter des systèmes de chauffage pour améliorer le confort et optimiser l'efficacité énergétique ;
2) de déclencher et arrêter automatiquement des éclairages en réponse à la détection de la présence de personnes dans ou à proximité du bassin ; et
3) de déclencher et arrêter automatiquement un système de traitement et de filtration et/ou un système de nage à contre-courant en réponse à la détection de la présence de personnes dans le bassin.

Bien entendu, la présente invention ne se limite pas aux formes de réalisation décrites ci-avant à titre d'exemples. Elle s'étend à d'autres variantes. Dans les revendications, le terme « comporter » n'exclut pas d'autres éléments ou d'autres étapes. L'article indéfini « un » n'exclut pas le pluriel. Les différentes caractéristiques présentées et/ou revendiquées peuvent être avantageusement combinées. Leur présence dans la description ou dans des revendications dépendantes différentes n'exclut pas, en effet, la possibilité de les combiner. Les signes de référence ne sauraient être compris comme limitant la portée de l'invention.

## Revendications

1. Procédé de gestion d'un bassin (102) d'une piscine (100), le procédé comprenant :
la réception de données d'au moins une source, la au moins une source comprenant au moins une source d'images représentatives du bassin et d'un environnement du bassin ;
le traitement de données reçues (205), les données traitées comprenant au moins une image de la au moins une source d'images, le traitement étant effectué dans un module d'intelligence artificielle entrainé pour reconnaître des signatures, les signatures étant représentatives d'une qualité de l'eau et/ou d'éléments physiques (126, 128, 130) présents dans un champ de vision de la au moins une source d'images, le traitement de données reçues comprenant en outre pour des signatures représentatives d'éléments physiques la détermination d'une position ou d'un état d'au moins un élément physique reconnu ;
le traitement d'au moins une signature reconnue (210), dans un système expert, pour déterminer une modification d'au moins un paramètre du bassin ; et
la transmission d'une commande à un actuateur (225) pour modifier le au moins un paramètre du bassin en fonction d'un résultat obtenu du traitement de l'au moins une signature reconnue.

2. Procédé selon la revendication 1, comprenant en outre la réception de données d'au moins une source distante, le système expert traitant la au moins une signature reconnue et des données reçues de la au moins une source distante pour déterminer une modification d'au moins un paramètre du bassin.

3. Procédé selon l'une des revendications 1 et 2, dans lequel le module d'intelligence artificielle (405) comprend plusieurs moteurs d'intelligence artificielle (405-1 à 405-5), chaque moteur d'intelligence artificielle étant configuré pour identifier des signatures d'un type prédéterminé.

4. Procédé selon l'une quelconque des revendications 1 à 3, dans lequel le système expert utilise au moins une règle configurée localement et au moins une règle configurée lors d'une phase d'installation ou reçue d'un serveur distant.

5. Procédé selon l'une quelconque des revendications 1 à 4, comprenant en outre l'identification d'un état à risque et le déclenchement d'une alarme (220).

6. Programme d'ordinateur comprenant des instructions adaptées à la mise en œuvre de chacune des étapes du procédé selon l'une quelconque des revendications 1 à 5 lorsque le programme est exécuté sur un ordinateur.

7. Dispositif comprenant des moyens adaptés à la mise en œuvre de chacune des étapes du procédé selon l'une quelconque des revendications 1 à 5.

## Patentansprüche

1. Verfahren zur Verwaltung eines Beckens (102) eines Pools (100), wobei das Verfahren umfasst:
Empfangen von Daten von mindestens einer Quelle, wobei die mindestens eine Quelle mindestens eine Quelle repräsentativer Bilder des Beckens und einer Beckenumgebung umfasst;
Verarbeiten empfangener Daten (205), wobei die verarbeiteten Daten mindestens ein Bild der mindestens einen Bildquelle umfassen, wobei das Verarbeiten in einem zum Erkennen von Signaturen trainierten künstlichen Intelligenzmodul durchgeführt wird, wobei die Signaturen repräsentativ für eine Wasserqualität und/oder physikalische Elemente (126, 128, 130) sind, die in einem Sichtfeld der mindestens einen Bildquelle vorhanden sind, wobei das Verarbeiten empfangener Daten für repräsentative Signaturen von physikalischen Elementen ferner das Bestimmen einer Position oder eines Zustands mindestens eines erkannten physikalischen Elements umfasst;
Verarbeiten mindestens einer erkannten Signatur (210) in einem Expertensystem, um eine Änderung mindestens eines Parameters des Beckens zu bestimmen; und
Senden eines Befehls an ein Stellglied (225) zum Ändern des mindestens einen Parameters des Beckens in Abhängigkeit von einem Ergebnis, das durch das Verarbeiten der mindestens einen erkannten Signatur erzielt wird.

2. Verfahren nach Anspruch 1, ferner umfassend das Empfangen von Daten von mindestens einer entfernten Quelle, wobei das Expertensystem die mindestens eine anerkannte Signatur und die von der mindestens einen entfernten Quelle empfangenen Daten verarbeitet, um eine Änderung des mindestens einen Parameters des Beckens zu bestimmen.

3. Verfahren nach einem der Ansprüche 1 und 2, wobei das künstliche Intelligenzmodul (405) mehrere künstliche Intelligenz-Engines (405-1 bis 405-5) umfasst, wobei jede künstliche Intelligenz-Engine so konfiguriert ist, dass sie Signaturen eines vorbestimmten Typs identifiziert.

4. Verfahren nach einem der Ansprüche 1 bis 3, wobei das Expertensystem mindestens eine lokal konfigurierte Regel und mindestens eine Regel verwendet, die während einer Installationsphase konfiguriert oder von einem entfernten Server empfangen wird.

5. Verfahren nach einem der Ansprüche 1 bis 4, ferner umfassend das Identifizieren eines gefährdeten Zustands und das Auslösen eines Alarms (220).

6. Computerprogrammprodukt, das Programmcodeanweisungen umfasst, die für das Bereitstellen des Verfahrens nach einem der Ansprüche 1 bis 5 ausgelegt sind, wenn das Programm auf einem Computer ausgeführt wird.

7. Vorrichtung, die Mittel umfasst, die für die Durchführung jedes der Schritte des Verfahrens nach einem der Ansprüche 1 bis 5 ausgelegt sind.

## Claims

1. Method for managing a pool (102) of a swimming pool (100), the method comprising:
receiving data from at least one source, the at least one source comprising at least one source of images representative of the pool and a pool environment;
processing received data (205), the data processed comprising at least one image of the at least one source of images, the processing being performed in an artificial intelligence module trained to recognize signatures, the signatures being representative of a quality of water and/or physical elements (126, 128, 130) present in a field of view of the at least one source of images, processing received data further comprising, for signatures representative of physical elements, determining a position or a state of at least one physical element recognized;
processing at least one recognized signature (210), in an expert system, to determine a change in at least one parameter of the pool; and
transmitting a command to an actuator (225) to change the at least one parameter of the pool according to a result obtained from processing the at least one signature recognized.

2. Method according to claim 1, further comprising receiving data from at least one remote source, the expert system processing the at least one signature recognized and the data received from the at least one remote source to determine a change in at least one parameter of the pool.

3. Method according to one of claims 1 and 2, wherein the artificial intelligence module (405) comprises several artificial intelligence engines (405-1 to 405-5), each artificial intelligence engine being configured to identify signatures of a predetermined type.

4. Method according to any one of claims 1 to 3, wherein the expert system uses at least one locally configured rule and at least one rule configured during an installation phase or received from a remote server.

5. Method according to any one of claims 1 to 4, further comprising identifying a risky state and triggering an alarm (220).

6. Computer program comprising instructions adapted for the implementation of each of the steps of the method according to any one of claims 1 to 5, when said program is executed on a computer.

7. Device comprising means adapted for the implementation of each of the steps of the method according to any one of claims 1 to 5.
